# EUROPEAN PATENT SPECIFICATION

(11) **EP 1 038 570 B1**
(45) Date of publication and mention of the grant of the patent: **10.05.2006**
(21) Application number: 00102545.1
(22) Date of filing: 08.07.1997
(51) Int. Cl.: B01D 67/00, B01D 71/68

(54) **Positively charged polymer membranes**
Positiv geladene Polymermembranen
Membranes polymère chargée positivement

(30) Priority: 08.07.1996 US 21369
(43) Date of publication of application: 27.09.2000
(62) Divisional of application: 97933314.3
(73) Proprietor: PALL CORPORATION, East Hills, NY 11548-1209 (US)
(72) Inventor: Wang, I-Fan, San Diego, CA 92129 (US); Zepf, Robert, Solana Beach, CA 92075 (US)
(74) Representative: Smaggasgale, Gillian Helen

(56) References cited:
- US-A- 3 808 305
- US-A- 4 125 462
- US-A- 5 269 931
- US-A- 5 531 893

## Description

### BACKGROUND OF THE INVENTION

### 1. Field of the Invention

The present invention relates to cationically charge-modified membranes and processes to prepare such membranes. Cationic charge-modified membranes disclosed herein are produced from membrane casting processes incorporating cationic components.

### 2. Background of the Technology

Cationically charge-modified membranes are useful in the removal of a variety of materials from solutions and also in certain biotechnological applications. For example, positively charged membranes are useful in the removal of endotoxins from solutions. Endotoxins are toxic substances often derived from bacterial lysates. In addition, such membranes have found utility in the removal of negatively charged species from feed-streams, such as in the preparation of ultrapure water for the semiconductor industry.

Ultrafiltration and microfiltration membranes utilized in industry, particularly in the food processing industry and in environmental applications, are typically hydrophobic membranes which may be surface-modified with a hydrophilic material to reduce fouling and to confer additional desirable properties to the membrane. Membranes may be isotropic or asymmetric (anisotropic) in their pore structure. Isotropic membranes have a uniform pore structure throughout the membrane. Asymmetric membranes do not have a uniform pore structure throughout the membrane. Asymmetric porous membranes are distinguished from isotropic, homogeneous membrane structures whose flow and retention properties are independent of flow direction. Asymmetric membranes are useful in microfiltration, ultrafiltration, and reverse osmosis processes.

Several different processes and reagents have been utilized to produce cationically charge-modified, initially hydrophilic or hydrophobic membranes, and related membranes.

U.S. Patent No. 4,012,324 to Gregor discloses casting formulations including a matrix polymer, a polyelectrolyte, a solvent, and a chemical cross-linking agent. Membranes are formed therefrom through a process of evaporating the solvent to form a membrane of uniform porosity and macroscopic homogeneity, having fixed anionic or cationic charges and a water content of from about 15 to about 75%. Membranes with substantial equilibrium water content are known as hydrogels and are subject to loss of water unless protected prior to use and additionally have limited application.

U.S. Patent No. 4,673,504 to Ostreicher, et al., discloses cationic charge-modified microporous membranes that are produced from hydrophilic organic polymeric microporous membranes. These microporous membranes are hydrophilic and isotropic, with uniform pore structure throughout the membrane. All hydrophobic membranes as well as anisotropic hydrophilic membranes are excluded from the '504 patent.

In U.S. Patent Nos. 4,737,291 and 4,743,418 to Barnes, Jr., et al., hydrophilic membranes which absorb or adsorb water and which contain hydroxyl, carboxyl or amino substituents are cationically modified and chemically crosslinked. Again, all hydrophobic membranes are excluded from the '291 and '418 patents.

U.S. Patent No. 4,797,187 to Davis, et al., discloses a method to prepare ionically bonded coacervate layer membranes having improved selectivity. However, the invention of the '187 patent does not produce cationically charge-modified membranes as final products.

In U.S. Patent No. 5,004,543 to Pluskal et al., hydrophobic substrates, comprising hydrophobic, microporous membranes having a crosslinked, cationic charge-modified coating are disclosed. The microporous membranes of the '543 patent are substantially isotropic, with a pore structure that is substantially uniform throughout the membrane. Charge-modified, hydrophobic membrane materials as disclosed in the '543 patent do not wet instantly when immersed into aqueous solutions. Monomeric, lower molecular weight wetting agents such as those utilized in the '543 patent are generally less efficient than higher molecular weight polymeric wetting agents for surface wetting, due to the production of much thinner surface adsorbed film layers and often also due to the production of layers with incomplete surface coverage.

U.S. Patent No. 5,098,569 to Stedronsky discloses surface-modified polymeric support membranes and a process for preparing a surface-modified membrane. Membranes are preferably hydrophobic and are surface-modified via the irreversible adsorption of a monomolecular layer of an activated modifying polymer. The Stedronsky patent employs a multistep process for preparing a surface modified membrane which consists of a polysaccharide, chemically crosslinked, modified surface which is not cationic.

U.S. Patent No. 5,151,189 to Hu, et al., discloses cationic charge-modified microporous hydrophilic membranes, as well as preparation of the same by post-treatment. The post-treatment process of the '189 patent begins with an inherently hydrophobic membrane made hydrophilic during manufacture with an intrinsic wetting agent such as polyvinylpyrrolidone or polyethylene glycol. It is desirable from the perspective of simplicity to avoid additives such as PVP and PEG which rely upon latently reactive functional groups to enhance hydrophilicity. Additionally, PVP and PEG are known to have lower surface adhesion to selected hydrophobic surfaces than other polymers with hydrophilic functional groups.

U.S. Patent No. 5,282,971 to Degen, et al., discloses a filter medium comprising microporous polyvinylidene fluoride membrane and a polymer containing positively charged quaternary ammonium groups covalently bonded to the membrane, and a method of using the membrane. The '971 patent relies upon careful control of polymerization reagents and a polymerization process, most often employing ionizing radiation, to produce a final membrane with the desired properties.

U.S. Patent No. 5,531,893 to Hu, et al., discloses a hydrophilic charged modified microporous membrane having a crosslinked structure of an interpenetrating polymer network. The membrane comprises a homogeneous matrix of polyether sulfone (PES), polyfunctional glycidyl ether, and a polymeric amine such as polyethyleneimine (PEI) and like polyamines, and polyethylene glycol. A shortcoming of the '893 patent is that membranes heated for the stabilization of the network structure have a lower cationic charge density. This is stated to be due to gradual decomposition of crosslinked PEI adduct in the membrane structure.

Thus, while it can be seen that various different processes and reagents have been utilized to produce cationically charge-modified membranes, each of the cited references has one or more undesirable features. Additionally, none of the cited references produces stable, cationically charge-modified, isotropic or anisotropic, optionally non-hydrogel membranes in a simple casting process without chemical crosslinking agents. Accordingly, there remains a need for improved, stable, cationically charged membranes which possess a plurality of fixed formal positive charges that can be readily produced from polymer starting materials in a casting process without complication or expensive apparatus and which are not restricted to isotropic or hydrogel membrane types.

### SUMMARY OF THE INVENTION

It is an object of the present invention to provide charge-modified membranes bearing a positive charge. The membranes disclosed herein are positively charged either by chemical post-treatment of an already formed membrane, or by co-casting a new membrane with charge-modifying agents. Accordingly, the present invention contemplates multiple means of achieving the object of providing positively charged membranes.

According to the invention a positively charged polymer membrane is provided. This membrane is cast from a formulation that Includes a sulfone polymer and a copolymer of vinylpyrrolidone and a cationic imidazolinium compound. The formulation also includes a low molecular weight organic acid and a solvent The sulfone polymer may be polysulfone, polyarylsutfone or polyethersulfone. The cationicimidazofmium compound may advantageously be methylvinylimidazoliummethyl sulfate. The acid may be selected from the group consisting of formic, acetic; propionic and butyric acid, and preferred solvents are N-methylpyrrolidone or dimethylformamide.

The formulation of this aspect of the invention included about 5-50 w/w% sulfone polymer and about 0.5-10.0 w/w% of the copolymer. In a preferred embodiment, the formulation contains about 10-25 w/w% polyethersulfone and about 1.0-5.0 w/w% copolymer of vinylpyrrolidone and methylvinylimidazoliummethyl sulfate. The membrane thus formed has at least one cationic charge-modifying agent crosslinked thereto. Such a cationic charge modifying agent may include a first agent or a second agent, or both the first and the second agent in combination. Preferred first agents Include a polyamine or an aziridine-ethylene oxide copolymer, and preferred second agent are epichlorohydrin-modified polyamines. In some embodiments, the first agent may be free of any epoxide or epichlorohydrin chemical crosslinking substituents, as in, for example, hydroxyethylpolyethyleneimine. The second agent may be Reten 201 (which has a MWt of 50K). The membrane may be crosslinked with the first agent and the second agent sequential or simultaneously.

Furthermore, a method of preparing a positively charged polymer membrane, employing the steps of: casting in a film a mixed polymer formulation containing a sulfone polymer, a copolymer of vinylpyrrolidone and a cationic Imidazolinium compound, formulation also includes a low motecular weight organic add and a solvent, and quenching the film In an aqueous bath to produce a coagulated membrane is provided.

The sulfone polymer may be selected from the group consisting of polysulfone, polyarylsulfone and polyethersulfone. A preferred cationic imidazolinium compound is methylvinylimidazoliummethyl sulfate. The add may be selected from the group consisting of formic, acetic, propionic and butyric add, and the solvent may advantageously be N-methylpyrrolidone or dimethylformamide.

In one embodiment, the formulation contains about 5-50 w/w% sulfone polymer and about 0.5-10.0 w/w% copolymer. In a preferred embodiment, the formulation contains about 10-25 w/w% polyethersulfone and about 1.0-5.0 w/w% copolymer of vinylpymolidone and methylvinylimidazoliummethyl sulfate.

This method further includes the step of crosslinking to the coagulated membrane at least one cationic charge-modifying agent Such a cationic charge modifying agent may include a first agent or a second agent, or both the first and the second agent in combination. The first agent may be a polyamine or an aziridine-ethylene oxide copolymer, and the second agent may be an epichlorohydrin-modified polyamine. A preferred first agent is free of any epoxide or epichlorohydrin chemical crosslinking substituents, as Is true of, for example, hydroxyethylpolyethyleneimine. The second agent may be Reten 201 (which has a MWt of 50K). According to the method, the membrane may be crosslinked with the first agent and the second agent sequentially or simultaneously.

### BRIEF DESCRIPTION OF THE FIGURE

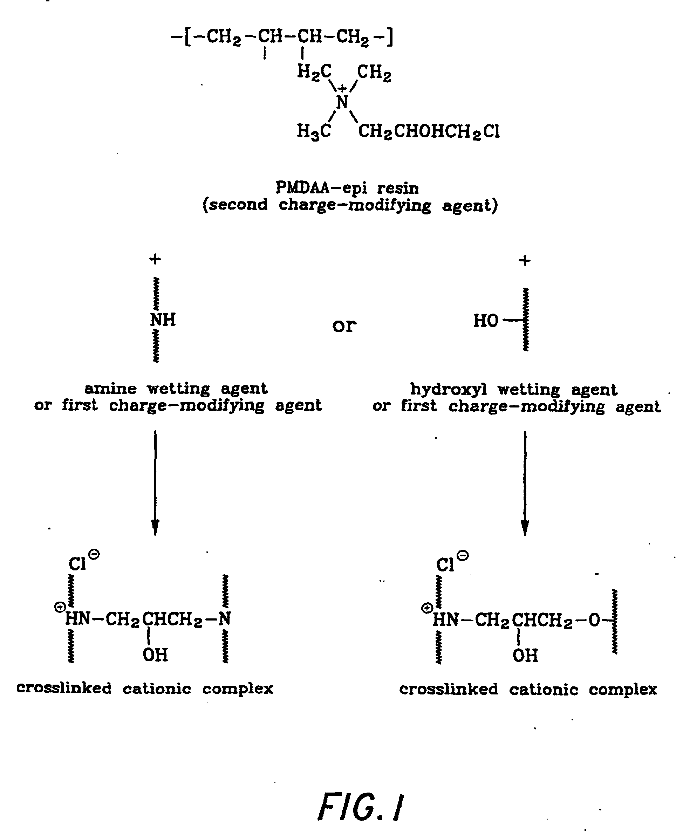

Figure 1 is a drawing showing the reaction scheme for one embodiment of the invention illustrating chemical crosslinking of the first cationic charge-modifying agent (HEPEI) with a second cationic charge-modifying agent, Kymene 736, an epichlorohydrin-modified polyamine resin.

It has been discovered that sufficient cationic charge modification of a membrane can be achieved by producing a membrane by casting a polymer blend containing a sulfone polymer with a copolymer of vinylpyrrolidone and a cationic imidazolinium compound without the use of an epoxide crosslinking agent or an epichlorohydrin modified polyamine to ensure the formation of crosslinks between the sulfone polymer and the cationic polymer and within the cationic polymer. It has been discovered that sufficient irreversible cationiccharge modification of a membrane produced by casting a polymer blend can be achieved without a chemically-induced crosslinking process altogether. The avoidance of chemical crosslinking agents in the aforementioned membrane manufacturing process is desirable from the environmental perspective to reduce the use of hazardous materials and production of hazardous waste. Additionally, it is known that unreacted chemical crosslinking agents in a finished membrane can cause membrane performance problems. It has been discovered in the present invention that a simple thermal-induced crosslinking of the cationic charge-modifying polymer with itself and the other components of the polymer blend can be employed to produce an irreversibly cationically charged membrane. Such cationic membranes exhibit a 99.9% anionic dye retention. Surprisingly, it has been discovered that such membranes produced by casting a polymer blend and post-treated with the aforementioned method of the present invention employing first and second cationic charge-modifying agents have improved retention of anionic dye.

Membranes of the present invention are useful in a variety of filtration applications, including the filtration of water and other fluids for electronics, pharmaceuticals, and biologics, as well as for endotoxin removal from secondary metabolite streams and blood filtration (including separation of leukocytes, lymphocytes, platelets, and the like).

### The First Cationic Charge-modifying Agent

In accordance with the invention, the first cationic charge-modifying agent is a polyamine or an aziridine-ethylene oxide copolymer. The polyamine and aziridine-ethylene oxide copolymer do not contain any epoxide or epichlorohydrin or like substituents capable of initiating chemical crosslinking with other functional groups or substituents. The polyamine is preferably selected from polyethyleneimine and like polyamines. The polyamine is most preferably an aliphatic polyamine having at least one secondary amine and a carboxyl or hydroxyl substituent. The aziridine-ethylene oxide copolymer contains at least one cationic aziridinium substituent as disclosed in U.S. Patent No. 4,797,187 to Davis et al, such disclosure being incorporated herein by reference. In the most preferred embodiments, the first cationic charge-modifying agent is hydroxyethylated polyethyleneimine (HEPEI) having the general structure: 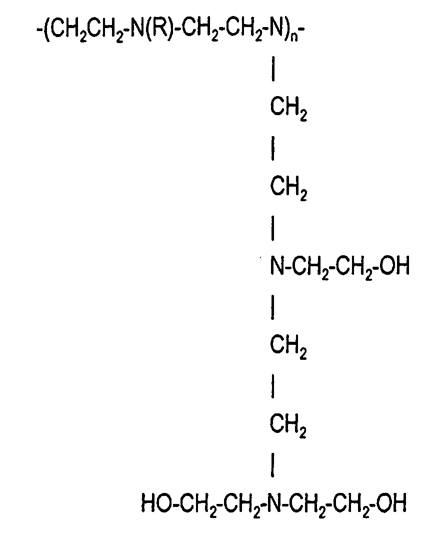 wherein R can be H or a continuation of the polymer chain. HEPEI is available from BASF Corporation, Mount Olive, NJ, under the trade name SC7-61 B. Preferred HEPEI possesses a molecular weight of between about 40,000 and 80,000 daltons, with 60,000 daltons preferred. Low molecular weight polyethyleneimine compounds can also be employed. One example of the latter compounds is poly G-20, a low molecular weight polyethyleneimine.

Preferably the HEPEI is dissolved in a suitable aqueous solution along with the second cationic charge-modifying agent, the solution optionally containing buffers and other agents such as tonicity agents or electrolytes.

### The Second Cationic Charge-modifying Agent

The second cationic charge-modifying agent which may be utilized in accordance with this invention may be characterized generally as a water soluble organic polymer having a molecular weight greater than about 1000 daltons, wherein the polymer has at least one epoxide or epichlorohydrin substituent capable of bonding to the first cationic charge-modifying agent or the surface of the wetting agent-modified membrane and wherein the polymer also has at least one tertiary amine or quaternary ammonium group capable of providing a cationic charge site. Preferably, the second cationic charge-modifying agent is an epichlorohydrin-modified polyamine, such as a polyamine epichlorohydrin resin, a polyamido-polyamine epichlorohydrin resin, or a resin based upon diallylnitrogen-containing materials reacted with epichlorohydrin. Such resins typically are the reaction product of a polyamine with epichlorohydrin and have (i) tertiary amine or quaternary ammonium groups, and (ii) epoxide or epichlorohydrin groups along the polyamine chain capable of bonding to the first cationic charge-modifying agent or surface of the wetting agent-modified membrane. U.S. Patent No. 4,673,504 to Ostreicher discloses cationic polyamine epichlorohydrin resins which are also suitable for use in the present invention, such disclosure being incorporated herein by reference. Depending upon the pore size of the membrane to be treated, either a high or a low molecular weight second cationic charge-modifying agent can be used. Examples of suitable epichlorohydrin-modified polyamines include the high molecular weight Kymene 736 and Kymene 450 resins and the Reten 201 (50 K MW) low molecular weight resin, all available from Hercules Co., Wilmington, DE. Kymene 736 is preferred. The chemical structure of this resin includes an epichlorohydrin-modified quaternary ammonium group.

As previously mentioned, it is possible to additionally utilize mild shear conditions with certain of these materials in order to reduce their effective molecular weight in order to allow the surface treatment of particular membranes. Thus, even when, for example, an ultrafiltration membrane having a very small pore size is desired to be treated, it is often possible to utilize higher than expected molecular weight second cationic charge-modifying agents by subjecting the second cationic charge-modifying agent to mild shear conditions.

Thus, in the most preferred embodiments of the present invention, HEPEI is utilized simultaneously with Kymene 736. Alternatively, either HEPEI or Kymene 736 may be used alone for cationic charge modification.

Figure 1 shows the reaction scheme for crosslinking HEPEI or HPC and Kymene 736.

### Cationic Membranes Formed From Casting A Mixed Polymer Solution

Further aspects of the invention provide a cationic charge-modified membrane and a process to prepare such a membrane by casting in a film a mixed polymer solution containing a sulfone polymer, a copolymer of vinylpyrrolidone and a cationic imidazolinium compound, a low molecular weight organic acid and a solvent, quenching the resulting film in an aqueous bath, and washing and drying the coagulated membrane. Conventional film casting, quenching, rinsing and drying procedures are employed. In a preferred embodiment, the sulfone polymer may be selected from the group consisting of polysulfone, polyarylsulfone and polyethersulfone. Polyethersulfone is preferred. Polyethersulfone can be employed with the chemical structure and molecular weight range as described in U.S. Patent No. 5,531,893 to Hu, et al., such disclosure being incorporated herein by reference. Generally, a concentration between about 5 and about 50% by weight of sulfone polymer may be employed in the polymer solution. Preferably, a concentration between about 10 and about 25% by weight is employed. Most preferably, a concentration of about 15% by weight of sulfone polymer is employed. The copolymer of vinylpyrrolidone and a cationic imidazolinium compound may be any copolymer containing any number of repeating vinylpyrrolidone groups and imidazolinium groups. In a preferred embodiment, the copolymer of vinylpyrrolidone and a cationic imidazolinium compound is a terpolymer of vinyl caprolactam, vinylpyrrolidone and methylvinylimidazoliummethyl sulfate. Generally, a concentration between about 0.5 and about 10% by weight of copolymer may be employed in the polymer solution. Preferably, a concentration between about 1.0 and about 5% by weight is employed. Most preferably, a concentration of 1.0-2.0% by weight of copolymer is employed. In another preferred embodiment, the low molecular weight organic acid is selected from the group consisting of formic, acetic, propionic and butyric acid. Propionic acid is preferred. Generally, a concentration between about 10 and about 60% by weight of acid may be employed in the polymer solution. Preferably, a concentration between about 25 and about 45% by weight is employed. Most preferably, a concentration of about 34-35% by weight of acid is employed. In another preferred embodiment, the solvent is N-methylpyrrolidone or dimethylformamide. N-methylpyrrolidone is preferred. Generally, a concentration between about 10 and about 60% by weight of solvent may be employed in the polymer solution. Preferably, a concentration between about 25 and about 55% by weight is employed. Most preferably, a concentration of about 49% by weight of solvent is employed. In another embodiment, the mixed polymer solution may be 5-50 w/w% sulfone polymer and 0.5-10.0 w/w% copolymer of vinylpyrrolidone and a vinylimidazole compound. In an additional embodiment, the mixed polymer solution may be 10-25 w/w% polyethersulfone and 1.0-5.0 w/w% copolymer of vinylpyrrolidone and methylvinylimidazoliummethyl sulfate.

In another embodiment, the washed and dried membrane is simultaneously charge-modified through treatment with an effective amount of a first and second cationic charge-modifying agent, or first or second charge-modifying agent alone. The first cationic charge-modifying agent may be a polyamine or an aziridine-ethylene oxide copolymer as previously described, the first cationic charge-modifying agent being free of any epoxide or epichlorohydrin or like chemical crosslinking substituents and the second cationic charge-modifying agent being an epichlorohydrin-modified polyamine as previously described. In a preferred embodiment, the first cationic charge-modifying agent may be HEPEI. In another preferred embodiment, the second cationic charge-modifying agent may be selected from the group consisting of Kymene 736, Kymene 450, and Reten 201. The amount of first and second cationic charge-modifying agent which can be employed is an amount as previously described for the treatment of formed hydrophilic membranes. The process for employing the aforementioned charge-modifying agents is also as previously described for the treatment of formed membranes. Following cationic charge modification, the membrane is subjected to thermal conditions designed to thermally and chemically crosslink the charge-modifying agents to the membrane as previously described.

### EXAMPLES

The following examples are provided to illustrate the present invention. However, such examples are merely illustrative and are not intended to limit the subject matter of the application. All chemical concentration percentages are w/v% unless otherwise indicated.

### EXAMPLE I

### Cationic Membrane Formed from Casting a Mixed Polymer Solution

A casting solution was prepared containing, by weight, 15% polyethersulfone, 34% propionic acid, 2% methylvinylimidazoliummethyl sulfate/vinyl pyrrolidone copolymer, and 49% N-methylpyrrolidone (NMP) as the solvent. Membrane samples were cast onto a moving belt of polyethylene coated paper using a casting knife with a knife gap of 14-15 mils (375-400 µm). Following casting, the membranes were quenched in water baths of about 22-33EC.

After coagulation, the membranes were washed with deionized water and then air dried. The recovered membranes had thicknesses of between 110 and 130 µm and were hydrophilic. Each of the membranes was tested for water permeability and protein retention on a 25-mm diameter disk (approximately 3.8 cm²) Amicon stirred cell. SEM micrographs showed an asymmetric membrane structure. The resulting membranes had a molecular weight cut-off of about 100,000 daltons.

This membranes was tested for anionic dye retention and retained 99.9% of the dye from more than 10 ml of dye solution filtered. The membrane was also post-treated with 0.8% HEPEI and 0.96% Kymene 736 aqueous solution and was post-cured at 110EC for 4 minutes. The retention of anionic dye under such a treatment was further improved; the membrane after treatment was able to efficiently remove the anionic dye from twice the volume of dye solution.

### EXAMPLE II

### Cationic Membrane Formed from Casting a Mixed Polymer Solution

A casting solution was prepared containing, by weight, 15% polyethersulfone, 35% propionic acid, 1% methylvinylimidazoliummethyl sulfate/vinyl pyrrolidone copolymer, and 49% NMP as the solvent. Membrane samples were cast onto a moving belt of polyethylene coated paper using a casting knife, with a knife gap of 15 mils (400 µm). Following casting, the membranes were quenched in a water bath of about 33EC.

After coagulation, the membranes were washed with deionized water and then air dried. The recovered membranes had thicknesses of between 110 and 125 µm and were hydrophilic. Each of the membranes was tested for water permeability and protein retention at 55-psid (379.2 kPad) on a 25-mm diameter disk Amicon stirred cell. SEM micrographs showed an asymmetric membrane structure. The resulting membrane had IgG retention of 93.2%.

This membrane was tested for anionic dye retention and retained 99.9% of the dye from more than 10 ml of solution filtered. This membrane was also post-treated with 0.8% HEPEI and .096% Kymene 736 aqueous solution and post-cured at 110EC for 4 minutes. The retention capacity of anionic dye was more than doubled by the post-treatment and post-curing process.

### EXAMPLE III

### Cationic Membranes Formed from a Co-Casting Process

Membranes of several different formulations and pore sizes are prepared according to the co-casting method of the invention. All are hydrophilic and exhibit efficient anionic dye retention. Co-cast membranes that are also post-treated by crosslinking to charge-modifying agents have enhanced anionic dye retention. Formulations are shown in Table I.

**TABLE I**

| **% Polymer** | **% Copolymer** | **% Acid** | **Solvent** | **Post-Treatment** | **Anionic Dye Retention** |
|---|---|---|---|---|---|
| 15 % PS | 2 % | 34 % formic | NMP (balance) | none | >90% from 10 ml |
| 15 % PES | 2 % | 24 % acetic | DMF (balance) | none | >90% from 10 ml |
| 15 % PAS | 2 % | 34 % propionic | NMP (balance) | none | >90% from 10 ml |
| 15 % PES | 2 % | 34 % formic | NMP (balance) | HEPEI | >90% from 20 ml |
| 15 % PES | 2 % | 34 % propionic | NMP (balance) | HEPEI + Kymene 736 | >90% from 20 ml |
| 15% PAS | 2 % | 24 % acetic | DMF (balance) | HEPEI + Reten | >90% from 20 ml |

### EQUIVALENTS

While the invention has been described in connection with specific embodiments thereof, it will be understood that it is capable of further modification, and this application is intended to cover any variations, uses, or adaptations of the invention following, in general, the principles of the invention and including such departures from the present invention as would be understood to those in the art as equivalent and the scope and context of the present invention is to be interpreted as including such equivalents and construed in accordance with the claims appended hereto.

## Claims

1. A positively charged polymer membrane, said membrane being obtainable by casting a polymer formulation comprising a sulfone polymer and a copolymer comprising vinylpyrrolidone and a cationic imidazolinium compound, said formulation further comprising a low molecular weight organic acid and a solvent, wherein the membrane comprises at least one cationic charge-modifying agent crosslinked thereto.

2. A membrane according, to claim 1, wherein said cationic imidazolinium compound is methylvinylimidazoliummethyl sulfate.

3. A membrane according to claim 1 or 2, wherein said acid is formic, acetic, propionic or butyric acid.

4. A membrane according to any of claims 1 to 3, wherein said solvent is N-methylpyrrolidone or dimethylformamide.

5. A membrane according to any of claims 1 to 4, wherein said cationic charge modifying agent comprises a first agent or second agent, or both said first and said second agent combination, wherein said first agent comprises a polyamine or an aziridine-ethylene oxide copolymer, and wherein said second agent comprises an epichlorohydrin-modified polyamine.

6. A membrane according to claim 5, wherein said first agent is free of any epoxide or epichlorohydrin chemical crosslinking substituents.

7. A membrane according to claim 5 or claim 6, wherein said first agent comprises hydroxyethylpolyethyleneimine.

8. A membrane according to any of claims 5 to 7,wherein said second agent comprises an epichlorohydrin-modified notyamine having a molecular weight of 50,000 daltons.

9. A membrane accomimg to any one of claims 5 to 8, wherein said membrane is contacted and crosslinked with said first agent and said second agent simultaneously.

10. A membrane according to any of claims 1 to 9 , wherein said formulation comprises about 5-50 w/w% sulfone polymer and about 0.5-10.0 w/w% copolymer.

11. A membrane according to claim 10 wherein said formulation comprises about 10-25 w/w% polyethersulfone and about 1.0-5.0 w/w% copolymer of vinylpyrrolidone and methylvinylimidazoliummethyl sulfate.

12. A membrane according to any one of claims 1 to 11, wherein said sulfone polymer is a polysulfone, polyarylsulfone, or polyethersulfone.

13. A method of preparing a positively charged polymer membrane, comprising the steps of:
casting in a film a mixed polymer formulation comprising a sulfone polymer, a copolymer of vinylpyrrolidone and a cationic imidazolinium compound, said formulation further comprising a low molecular weight organic acid and a solvent;
quenching said film in an aqueous bath to produce a coagulated membrane; and
crosslinking to said coagulated membrane at least one cationic charge-modifying agent.

14. A method according to claim 13 wherein said cationic imidazolinium compound is methylvinylimidazoliummethyl sulfate.

15. A method according to claim 13 or claim 14 wherein said acid is formic, acetic, propionic and butyric acid.

16. A method according to any of claims 13 to 15 wherein said solvent is N-methylpyrrolidone or dimethylformamide.

17. A method according to any of claims 13 to 16, wherein said cationic charge modifying agent comprises a first agent or a second agent, or both said first and said second agent in combination, wherein said first agent comprises a polyamine or an aziridine-ethylene oxide copolymer, and wherein said second agent comprises an epichlorohydrin-modified polyamine.

18. A method according to claim 17, wherein said first agent is free of any epoxide or epichlorohydrin chemical crosslinking substituents.

19. A method according to claim 18 wherein said first agent comprises hydroxyethylpolyethyleneimine.

20. A method according to any one of claims 17 to 19, wherein said second agent comprises an epichlorohydrin-modified polyamine having a molecular weight of 50,000 daltons.

21. A method according to any one of claims 17 to 20, wherein said membrane is contacted and crosslinked with said first agent and said second agent simultaneously.

22. A method according to any of claims 13 to 21, wherein said formulation comprises about 5-50 w/w% sulfone polymer and about 0.5-10.0 w/w% copolymer.

23. A method according to claim 22 wherein said formulation comprises about 10-25 w/w% polyethersulfone and about 1.0-5.0 w/w% copotymar of vinylpyrrolidone and methylvinylimidazoliummethyl sulfate.

24. A method according to any one of claims 13 to 23, wherein said sulfone polymer is a polysulfone, polyarylsulfone, or polyethersulfone.

## Patentansprüche

1. Positiv geladene Polymermembran, die durch Gießen einer Polymerformulierung erhältlich ist, die ein Sulfonpolymer und ein Vinylpyrrolidon und eine kationische Imidazoliniumverbindung enthaltendes Copolymer sowie ferner eine niedermolekulare organische Säure und ein Lösungsmittel aufweist, wobei die Membran wenigstens ein mit ihr vernetztes, die kationische Ladung modifizierendes Mittel enthält.

2. Membran nach Anspruch 1, bei der die kationische Imidazoliniumverbindung Methylvinylimidazoliniummethylsulfat ist.

3. Membran nach Anspruch 1 oder 2, bei der die Säure Ameisen-, Essig-, Propion- oder Buttersäure ist.

4. Membran nach einem der Ansprüche 1 bis 3, bei der das Lösungsmittel N-Methylpyrrolidon oder Dimethylformamid ist.

5. Membran nach einem der Ansprüche 1 bis 4, bei der das die kationische Ladung modifizierende Mittel ein erstes Mittel oder zweites Mittel oder das erste und das zweite Mittel in Kombination umfaßt, wobei das erste Mittel ein Polyamin oder ein Aziridin-Ethylenoxid-Copolymer aufweist und das zweite Mittel ein durch Epichlorhydrin modifiziertes Polyamin aufweist.

6. Membran nach Anspruch 5, bei der das erste Mittel frei von jeglichen chemischen Epoxid oder Epichlorhydrin vernetzenden Substituenten ist.

7. Membran nach Anspruch 5 oder Anspruch 6, bei der das erste Mittel Hydroxyethylpolyethylenimin enthält.

8. Membran nach einem der Ansprüche 5 bis 7, bei der das zweite Mittel ein Epichlorhydrin-modifiziertes Polyamin mit einem Molekulargewicht von 50.000 Dalton enthält.

9. Membran nach einem der Ansprüche 5 bis 8, bei der die Membran mit dem ersten Mittel und dem zweiten Mittel gleichzeitig in Berührung gebracht und vernetzt ist.

10. Membran nach einem der Ansprüche 1 bis 9, bei der die Formulierung etwa 5 bis 50 Gew.-% Sulfonpolymer und etwa 0,5 bis 10,0 Gew.-% Copolymer aufweist.

11. Membran nach Anspruch 10, bei der die Formulierung etwa 10 bis 25 Gew.-% Polyethersulfon und etwa 1,0 bis 5,0 Gew.-% Copolymer des Vinylpyrrolidons und Methylvinylimidazoliniummethylsulfats umfaßt.

12. Membran nach einem der Ansprüche 1 bis 11, bei der das Sulfonpolymer ein Polysulfon, Polyarylsulfon oder Polyethersulfon ist.

13. Verfahren zur Herstellung einer positiv geladenen Polymermembran mit den Stufen des
Gießens einer gemischten Polymerformulierung, die ein Sulfonpolymer, ein Copolymer aus Vinylpyrrolidon und einer kationischen Imidazoliniumverbindung und ferner eine niedermolekulare organische Säure und ein Lösungsmittel umfaßt, zu einem Film,
Abschreckens des Films in einem wässrigen Bad zur Herstellung einer koagulierten Membran, und
Vernetzens wenigstens eines die kationische Ladung modifizierenden Mittels mit der genannten koagulierten Membran.

14. Verfahren nach Anspruch 13, bei dem die kationische Imidazoliniumverbindung Methylvinylimidazoliniummethylsulfat ist.

15. Verfahren nach Anspruch 13 oder Anspruch 14, bei dem die Säure Ameisen-, Essig-, Propion- oder Buttersäure ist.

16. Verfahren nach einem der Ansprüche 13 bis 15, bei dem das Lösungsmittel N-Methylpyrrolidon oder Dimethylformamid ist.

17. Verfahren nach einem der Ansprüche 13 bis 16, bei dem das die kationische Ladung modifizierende Mittel ein erstes Mittel oder zweites Mittel oder das erste und der zweite Mittel in Kombination umfaßt, wobei das erste Mittel ein Polyamin oder ein Aziridin-Ethylenoxid-Copolymer aufweist und das zweite Mittel ein durch Epichlorhydrin modifiziertes Polyamin aufweist.

18. Verfahren nach Anspruch 17, bei dem das erste Mittel frei von jeglichen chemischen Epoxid oder Epichlorhydrin vernetzenden Substituenten ist.

19. Verfahren nach Anspruch 18, bei dem das erste Mittel Hydroxyethylpolyethylenimin enthält.

20. Verfahren nach einem der Ansprüche 17 bis 19, bei dem das zweite Mittel ein Epichlorhydrin-modifiziertes Polyamin mit einem Molekulargewicht von 50.000 Dalton enthält.

21. Verfahren nach einem der Ansprüche 17 bis 20, bei dem die Membran mit dem ersten Mittel und dem zweiten Mittel gleichzeitig in Berührung gebracht und vernetzt wird.

22. Verfahren nach einem der Ansprüche 13 bis 21, bei dem die Formulierung etwa 5 bis 50 Gew.-% Sulfonpolymer und etwa 0,5 bis 10,0 Gew.-% Copolymer aufweist.

23. Verfahren nach Anspruch 22, bei dem die Formulierung etwa 10 bis 25 Gew.-% Polyethersulfon und etwa 1,0 bis 5,0 Gew.-% Copolymer des Vinylpyrrolidons und Methylvinylimidazoliniummethylsulfats umfaßt.

24. Verfahren nach einem der Ansprüche 13 bis 23, bei dem das Sulfonpolymer ein Polysulfon, Polyarylsulfon oder Polyethersulfon ist.

## Revendications

1. Membrane polymère chargée positivement, ladite membrane pouvant être obtenue par coulée d'une formulation polymère comprenant un polymère de sulfone et un copolymère comprenant de la vinylpyrrolidone et un composé d'imidazolinium cationique, ladite formulation comprenant en outre un acide organique de faible masse moléculaire et un solvant, où la membrane comprend au moins un agent modificateur de charge cationique réticulé avec elle.

2. Membrane selon la revendication 1 où ledit composé d'imidazolinium cationique est le méthylsulfate de méthylvinylimidazolium.

3. Membrane selon la revendication 1 ou 2 où ledit acide et l'acide formique, acétique, propionique ou butyrique.

4. Membrane selon l'une quelconque des revendications 1 à 3 où ledit solvant est la N-méthylpyrrolidone ou le diméthylformamide.

5. Membrane selon l'une quelconque des revendications 1 à 4 où ledit agent modificateur de charge cationique comprend un premier agent ou un second agent, ou ledit premier et ledit second agent en combinaison, où ledit premier agent comprend une polyamine ou un copolymère aziridine-oxyde d'éthylène, et où ledit second agent comprend une polyamine modifiée avec l'épichlorhydrine.

6. Membrane selon la revendication 5 où ledit premier agent est dépourvu de tout substituant de réticulation chimique époxyde ou épichlorhydrine.

7. Membrane selon la revendication 5 ou la revendication 6 où ledit premier agent comprend de l'hydroxyéthylpolyéthylèneimine.

8. Membrane selon l'une quelconque des revendications 5 à 7 où ledit second agent comprend une polyamine modifiée avec l'épichlorhydrine ayant une masse moléculaire de 50000 daltons.

9. Membrane selon l'une quelconque des revendications 5 à 8 où ladite membrane est mise en contact et réticulée avec ledit premier agent et ledit second agent simultanément.

10. Membrane selon l'une quelconque des revendications 1 à 9 où ladite formulation comprend environ 5-50 % m/m de polymère de sulfone et environ 0,5-10,0 % m/m de copolymère.

11. Membrane selon la revendication 10 où ladite formulation comprend environ 10-25 % m/m de polyéthersulfone et environ 1,0-5,0 % m/m de copolymère de vinylpyrrolidone et d'éthylsulfate de méthylvinylimidazolium.

12. Membrane selon l'une quelconque des revendications 1 à 11 où ledit polymère de sulfone est une polysulfone, une polyarylsulfone ou une polyéthersulfone.

13. Procédé de préparation d'une membrane polymère chargée positivement comprenant les étapes de :
coulée en un film d'une formulation polymère mixte comprenant un polymère de sulfone, un copolymère de vinylpyrrolidone et d'un composé d'imidazolinium cationique, ladite formulation comprenant en outre un acide organique de faible masse moléculaire et un solvant ;
trempe dudit film dans un bain aqueux pour produire une membrane coagulée ; et
réticulation à ladite membrane coagulée d'au moins un agent modificateur de charge cationique.

14. Procédé selon la revendication 13 où ledit composé d'imidazolinium cationique est le méthylsulfate de méthylvinylimidazolium.

15. Procédé selon la revendication 13 ou la revendication 14 où ledit acide et l'acide formique, acétique, propionique et butyrique.

16. Procédé selon l'une quelconque des revendications 13 à 15 où ledit solvant est la N-méthylpyrrolidone ou le diméthylformamide.

17. Procédé selon l'une quelconque des revendications 13 à 16 où ledit agent modificateur de charge cationique comprend un premier agent ou un second agent, ou ledit premier et ledit second agent en combinaison, où ledit premier agent comprend une polyamine ou un copolymère aziridine-oxyde d'éthylène, et où ledit second agent comprend une polyamine modifiée avec l'épichlorhydrine.

18. Procédé selon la revendication 17 où ledit premier agent est dépourvu de tout substituant de réticulation chimique époxyde ou épichlorhydrine.

19. Procédé selon la revendication 18 où ledit premier agent comprend de l'hydroxyéthylpolyéthylèneimine.

20. Procédé selon l'une quelconque des revendications 17 à 19 où ledit second agent comprend une polyamine modifiée avec l'épichlorhydrine ayant une masse moléculaire de 50000 daltons.

21. Procédé selon l'une quelconque des revendications 17 à 20 où ladite membrane est mise en contact et réticulée avec ledit premier agent et ledit second agent simultanément.

22. Procédé selon l'une quelconque des revendications 13 à 21 où ladite formulation comprend environ 5-50 % m/m de polymère de sulfone et environ 0,5-10,0 % m/m de copolymère.

23. Procédé selon la revendication 22 où ladite formulation comprend environ 10-25 % m/m de polyéthersulfone et environ 1,0-5,0 % m/m de copolymère de vinylpyrrolidone et d'éthylsulfate de méthylvinylimidazolium.

24. Procédé selon l'une quelconque des revendications 13 à 23 où ledit polymère de sulfone est une polysulfone, une polyarylsulfone ou une polyéthersulfone.
